# EUROPÄISCHE PATENTANMELDUNG

(11) **EP 1 185 133 A2**
(43) Veröffentlichungstag der Anmeldung: **06.03.2002**
(21) Anmeldenummer: 01440217.6
(22) Anmeldetag: 11.07.2001
(51) Int. Cl.: H04Q 11/04

(54) **Bereitstellen eines Dienstes oder einer Applikation mit einer bestimmten QoS-Klasse**

(30) Priorität: 30.08.2000 DE 10042509
(71) Anmelder: ALCATEL, 75008 Paris (FR)
(72) Erfinder: Wahl, Stefan, 71701 Schwieberdingen (DE)
(74) Vertreter: Menzietti, Domenico, Dipl.-Ing

(57) **Zusammenfassung**

Beim erfindungsgemäßen Verfahren wird zum Bereitstellen eines Dienstes oder einer Applikation ein von einem Kunden angeforderter Dienst oder eine von dem Kunden angeforderte Applikation mit einer von dem Kunden ausgewählten QoS-Klasse verknüpft und dem Kunden der angeforderte Dienst bzw. die angeforderte Applikation mit der vom Kunden ausgewählten QoS-Klasse bereitgestellt. Bei einer ersten Ausführungsvariante des erfindungsgemäßen Verfahrens wird im Ressourcen Management von einem Endgerät des Kunden eine Anfrage zur Bereitstellung eines Dienstes oder einer Applikation empfangen und zum Kunden eine Anfrage zur Auswahl einer von mindestens zwei QoS-Klassen übertragen. Im Ressourcen Management wird die ausgewählte QoS-Klasse vom Endgerät empfangen und durch das Ressourcen Management wird der angefragte Dienst bzw. die angefragte Applikation dem Endgerät mit der ausgewählten QoS-Klasse bereitgestellt. Die Erfindung stellt somit ein flexibles, kundendefiniertes QoS-Management zur Verfügung. Die Erfindung ist ein neues Leistungsmerkmal, das insbesondere in Zugangssysteme implementiert werden kann.

## Beschreibung

Die Erfindung betrifft das Bereitstellen eines Dienstes oder einer Applikation mit einer bestimmten QoS-Klasse; QoS = Quality of Service.

Dienste und Applikationen werden u.a. in Zugangssystemen bereitgestellt. Solche Zugangssysteme sind beispielsweise als sogenannte shared medium access systems ausgebildet. Ein solches Zugangsystem ist beispielsweise ein HFC-System, ein HFR-System, ein LMDS-System oder ein XDSL-System; HFC = Hybrid Fibre Coax, HFR = Hybrid Fibre Radio, LMDS = Local Multipoint Distribution System; XDSL = X Digital Subscriber Line, wobei X z.B. für Asynchron, Synchron, Very High-Speed etc. steht. In solchen Zugangssystemen ist zumeist für die Übertragung von einer Zentrale oder Unterzentrale, z.B. ein Head End oder eine Basisstation, zu den Endgeräten der Kunden, z.B. Cable Modems oder Funkstationen, ein Punkt-zu-Mehrpunkt-Netzwerk ausgebildet. Für die Übertragung von den Endgeräten zur Zentrale bzw. Unterzentrale ist ein Mehrpunkt-zu-Punkt-Netzwerk ausgebildet. Eine Vielzahl von Diensten und Applikationen werden den Kunden bereitgestellt. Dies sind z.B. interaktive Dienste wie Service on demand zur Bereitstellung von Sprach- und/oder Bilddiensten, Dienste zum Übertragen von Daten, Internetdienste, Kabelfernsehen, Telefonie, z.B. das sogenannte Voice over IP, IP = Internet Protocol, Bankdienste für online-banking.

Ein intelligentes Ressourcen-Management mit QoS ist erforderlich, um eine faire und ausreichende Verteilung der verfügbaren Ressourcen an Kunden, Dienste und Applikationen zu erreichen. Unter QoS, dem sogenannten Quality of Service, wird dabei die Übertragungsqualität einer Verbindung verstanden. Für eine Bild- oder Videoverbindung ist beispielsweise eine höhere Übertragungsqualität erforderlich als für eine reine Sprach- oder Audioverbindung.

Die Verfügbarkeit sowie die Verlässlichkeit der Bandbreite sowohl in Richtung von der Zentrale oder Unterzentrale zu den Endgeräten der Kunden als auch in der Richtung von den Endgeräten zur Zentrale bzw. Unterzentrale muss gemanaged werden.

QoS-Klassen sind beispielsweise:
a) Premium Service, bei dem hohe QoS-Anforderungen bestehen, z.B. bezüglich der maximalen Zeitverzögerung (delay) innerhalb einer Zelle, dem Jitter, beim Aufbau von virtuellen, gemieteten Verbindungen (setup of leased lines),
b) Assured Service, bei dem niedrigere Anforderungen bestehen als beim Premium Service und bei dem mehr Variabilität sowie auch ein sogenannter bursty traffic möglich ist,
c) Best Effort Service, bei dem die niedrigsten Anforderungen bestehen.

Jedem Dienst und jeder Applikation ist heutzutage eine bestimmte QoS-Klasse vorab zugeordnet. Bei der Auswahl eines Dienstes durch den Kunden, z.B. durch Übertragung einer entsprechenden Anforderung zur Bereitstellung eines Dienstes zu einer Zentrale, stellt die Zentrale automatisch eine bestimmte Bandbreite zur Verfügung, die mit der QoS-Klasse für den ausgewählten Dienst korrespondiert. Die bereitzustellende Bandbreite ist für die Richtung von der Zentrale zu den Engeräten der Kunden und in der Richtung von den Endgeräten zur Zentrale für jeden Dienst und jede Applikation fest vorgegeben.

Wird beispielsweise eine Premium Service Applikation angefordert und steht nicht mehr genügend Bandbreite zur Verfügung, so kann und wird die Applikation nicht zur Verfügung gestellt.

Aufgabe der Erfindung ist es, ein alternatives QoS-Management zur Verfügung zu stellen.

Gelöst wird diese Aufgabe jeweils durch ein Verfahren gemäß Patentanspruch 1 und eine Zentrale gemäß Patentanspruch 6.

Der Kunde erhält die Möglichkeit, die QoS-Klasse für jeden Dienst und jede Applikation selbst auszuwählen. Zusätzlich erhält er z.B. die Möglichkeit, die QoS-Klasse auch on-line, also während des Betriebes, also während einer Verbindung zu verändern. Die Auswahl einer QoS-Klasse erfolgt z.B. bei jeder Anfrage nach Erhalt einer Auswahlliste von der Zentrale. Die Zentrale übermittelt z.B. drei Möglichkeiten, die durch Ankreuzen oder dergleichen auswählbar sind. Die Auswahlliste enthält gegebenenfalls Einschränkungen; z.B. kann für Kabelfernsehen nur der Premium Service und der Assured Service, nicht aber der Best Effort Service ausgewählt werden. Die Einschränkung erfolgt z.B. auf Grund von technischen oder kommerziellen Gründen. Die Auswahl einer QoS-Klasse erfolgt alternativ durch Übermitteln einer Auswahl einer QoS-Klasse gleichzeitig mit der Anfrage zur Bereitstellung eines Dienstes oder einer Applikation. Ein Kunde kann somit mit der Auswahl des Dienstes bzw. der Applikation gleich die Auswahl der QoS-Klasse mit treffen. Eine weitere Möglichkeit der Auswahl von QoS-Klassen besteht darin, dass für einzelne oder jeden Kunden eine Tabelle in der Zentrale abgespeichert wird, in der eine Vorabauswahl des Kunden eingetragen wird. Ein Kunde wählt z.B. einmal eine bestimmte Konfiguration, die dann in der Zentrale abgespeichert wird und auf die die Zentrale bei jeder Anfrage nach einem Dienst oder einer Applikation Zugriff hat. Fragt ein Kunde einen Dienst an, so ermittelt die Zentrale über die Tabelle die individuelle QoS-Klasse des Kunden und stellt ihm daraufhin die entsprechende Bandbreite für die angeforderten Dienst zur Verfügung. Die Konfiguration kann für alle Dienste und Applikationen die gleiche QoS-Klasse beinhalten, z.B. Assured Service oder für unterschiedliche Kategorien von Diensten unterschiedliche QoS-Klassen, z.B. für alle Bildverbindungen Assured Service und für alle Daten- und Sprachverbindungen Best Effort Service.

Die Erfindung stellt somit ein flexibles, kundendefiniertes QoS-Management zur Verfügung. Die Erfindung ist ein neues Leistungsmerkmal, das insbesondere in Zugangssysteme implementiert werden kann. Falls nicht genügend Bandbreite für eine Verbindung mit einer hohen QoS-Klasse zur Verfügung steht, kann der Kunde eine niedrigere QoS-Klasse wählen und damit einen Dienst oder eine Applikation, wenn auch mit niedrigerer Qualität als ursprünglich gewünscht, in Anspruch nehmen. Die Zentrale stellt dem Kunden in diesem Fall beispielsweise geeignete Alternativen zur Auswahl zur Verfügung. Ein Vorteil für den Kunden besteht in der selbstständigen Festlegung der Verbindungskosten durch geeignete Auswahl der QoS-Klasse, da eine höhere QoS-Klasse in der Regel zu höheren Verbindungskosten führt. Es ist auch denkbar, dass es für vom Kunden vorab gewählte Konfigurationen Pauschalangebote gibt. Ferner kann die QoS-Klasse zusätzlich oder alternativ zur Uhrzeit ein weiterer bzw. der Parameter für die Bestimmung der aktuellen Gebühren sein.

Vorteilhafte Ausgestaltungen der Erfindung sind den abhängigen Patentansprüchen und der nachfolgenden Beschreibung zu entnehmen.

Im folgenden wird ein Ausführungsbeispiel der Erfindung erläutert.

Eine Internet Verbindung (IP-Verbindung), die von einem Kunden angefordert wird, wird beispielsweise über einen IP-Router, ein ATM-Switch und ein Zugangssystem zur Verfügung gestellt; ATM = Asynchroner Transfer Modus. Zu Beginn der Applikation hat der Kunde die Wahl eine QoS-Klasse für die Verbidung zu selektieren. Jede QoS-Klasse hat eine Anzahl von Parametern. Alle Parameter haben Default-Einstellungen. Jeder Parameter kann verändert werden. Der Kunde wird beispielsweise durch ein Ressourcen Management mit einem MAC (Medium Access Control) darüber informiert, welche QoS-Klasse welche aktuellen Default-Parameter hat. Die Default-Parameter können z.B. abhängig von der Uhrzeit variieren. Parameter sind beispielsweise die Bandbreite, das maximale Delayjitter, die Kosten, etc. Der Kunde kann dann seine Auswahl zum MAC übertragen. Der MAC wird die entsprechende Applikation mit der ausgewählten QoS-Klasse zur Verfügung stellen. Um eine Auswahl durchführen zu können, wird im Ressourcen Management und beim Kunden jeweils ein spezielles Software Management Tool installiert. Das Software Tool des Kunden, das als Computer Programm ausgelegt ist, wird auf einem Endgerät des Kunden installiert. Das Endgerät ist beispielsweise ein Cable Modem oder ein PC (Personalcomputer) oder eine Funkstation. Das Software Tool dient dazu, Zugang zum Ressourcen Management und zur Gebührenerfassungszentrale zu erhalten. Die Gebührenerfassungszentrale kann dann den Kunden beispielsweise on-line über die aktuellen Gebühren einer laufenden Applikation informieren. Das Ressourcen Management ist beispielsweise in einer Zentrale, einer Unterzentrale, einem Head End, einer Basisstation oder einer sogenannten Access Network Adaptation angeordnet. Im Ressourcen Management ist ein zum Software Tool des Kunden korrespondierendes Software Management Tool installiert. Mittels dieses Software Tools wird die Bereitstellung der telemetrischen Auswahl der QoS-Klassen ermöglicht. In der Gebührenerfassungszentrale sind zumindest Teile dieses Tools installiert.

Zusammenfassend wird somit beim erfindungsgemäßen Verfahren zum Bereitstellen eines Dienstes oder einer Applikation ein von einem Kunden angeforderter Dienst oder eine von dem Kunden angeforderte Applikation mit einer von dem Kunden ausgewählten QoS-Klasse verknüpft und dem Kunden der angeforderte Dienst bzw. die angeforderte Applikation mit der vom Kunden ausgewählten QoS-Klasse bereitgestellt.

Bei einer ersten Ausführungsvariante des erfindungsgemäßen Verfahrens wird im Ressourcen Management von einem Endgerät des Kunden eine Anfrage zur Bereitstellung eines Dienstes oder einer Applikation empfangen und zum Kunden eine Anfrage zur Auswahl einer von mindestens zwei QoS-Klassen übertragen. Im Ressourcen Management wird die ausgewählte QoS-Klasse vom Endgerät empfangen und durch das Ressourcen Management wird der angefragte Dienst bzw. die angefragte Applikation dem Endgerät mit der ausgewählten QoS-Klasse bereitgestellt.

Bei einer zweiten Ausführungsvariante des erfindungsgemäßen Verfahrens wird im Ressourcen Management von einem Endgerät des Kunden eine Anfrage zur Bereitstellung eines Dienstes oder einer Applikation empfangen, wobei die Anfrage eine von mindestens zwei QoS-Klassen beinhaltet, die vom Kunden vorab ausgewählt wurde. Der angefragte Dienst bzw. die angefragte Applikation wird dem Endgerät mit der ausgewählten QoS-Klasse bereitgestellt.

Bei einer dritten Ausführungsvariante des erfindungsgemäßen Verfahrens wird im Ressourcen Management von einem Endgerät des Kunden eine Anfrage zur Bereitstellung eines Dienstes oder einer Applikation empfangen und anschließend auf eine abgespeicherte Vorabauswahl einer QoS-Klasse des Kunden zugegriffen. Der von dem Kunden angeforderter Dienst oder die von dem Kunden angeforderte Applikation wird im Ressourcen Management mit der von dem Kunden vorab ausgewählten QoS-Klasse verknüpft. Dem Kunden wird anschließend der angeforderte Dienst bzw. die angeforderte Applikation mit der vom Kunden ausgewählten QoS-Klasse bereitgestellt.

Bei allen drei Ausführungsvarianten kann als zusätzliches Merkmal vorgesehen sein, dass die ausgewählte und bereitgestellte QoS-Klasse während der Dauer der Bereitstellung des Dienstes bzw. der Applikation durch den Kunden gewechselt werden kann durch Übertragen einer neuen ausgewählten QoS-Klasse.

Bei einer vierten Ausführungsvariante kann das Merkmal, dass die ausgewählte und bereitgestellte QoS-Klasse während der Dauer der Bereitstellung des Dienstes bzw. der Applikation durch den Kunden gewechselt werden kann durch Übertragen einer neuen ausgewählten QoS-Klasse auch unabhängig implementiert werden. Beispielsweise wird jede von einem Kunden angeforderte Verbindung für Dienst oder Applikation zunächst mit Default-Werten gestartet. Der Kunde erhält somit ohne Auswahl von Parametern einer QoS direkt eine Verbindung. Der Kunde kann sich dann während der Verbindung entschließen, die QoS-Klasse zu verändern. Gründe für diesen Wunsch können z.B. sein:

Während einer Internet Session ist dem Kunden der Bildaufbau zu langsam. Durch geeignete Veränderung der QoS-Klasse kann der Bildaufbau für die nachfolgenden Bilder beschleunigt werden.

Oder während der Dauer der Verbindung wird eine Anzeige betreffend die Gebühren mit übertragen. Wird dem Kunden die Session oder das Telefonat oder dergleichen zu teuer, so kann er durch geeignetes Verändern der QoS-Klasse, z.B. durch Herabstufen derselben, die laufenden Gebühren reduzieren.

Die Möglichkeit die QoS-Klasse nur während der Verbindung, aber nicht zu deren Beginn zu verändern, hat folgende Vorteile: Kunden, die sich mit der Auswahl der QoS-Klasse nicht beschäftigen wollen erhalten direkt eine Verbindung ohne Zeitverzögerung und ohne eine Auswahl treffen zu müssen. Kunden, die eine Auswahl der QoS-Klasse wünschen erhalten ebenfalls direkt eine Verbindung und können on-line die Unterschiede zwischen zwei QoS-Klassen beobachten. Um z.B. Nachteile durch eventuell zu hoch eingestellte Default-Werte und damit zu hohen Gebühren zu umgehen, setzt die Abrechnung der Gebühren beispielsweise erst nach einer gewissen Zeitspanne, z.B. zehn Sekunden, nach Verbindungsaufbau ein. Aktive Kunden haben bis dahin ihre Auswahl der QoS-Klasse getroffen.

Die Auswahl der QoS-Klassen kann bei allen vier Ausführungsvarianten beispielsweise anstelle oder zusätzlich zur Auswahl einzelner Parameter durch ein Icon erfolgen, das eine einfache Regelung hinsichtlich der Qualität beinhaltet. Durch stufenloses oder gestuftes Regeln, d.h. Verschieben der Regelung, kann dann auf einfache Art und Weise mehr oder weniger Qualität angefordert werden.

Die erfindungsgemäße Zentrale zur Bereitstellung von Diensten und/oder Applikationen für Kunden deren Endgeräte mit der Zentrale verbunden sind ist geeignet, bei einer Anfrage eines Kunden nach einem Dienst oder Applikation diesen Dienst bzw. die Applikation mit einer QoS-Klasse bereitzustellen, die einer vom Kunden ausgewählten QoS-Klasse entspricht. Die Zentrale hat dazu einen Datenträger mit einem Computer Programm. Das Computer Programm ist geeignet, eine von einem Kunden ausgewählte QoS-Klasse mit einem vom Kunden angeforderten Dienst oder eine vom Kunden angeforderte Applikation zu verknüpfen. Die Zentrale beinhaltet eine Recheneinheit, z.B. einen Prozessor, auf dem das Computer Programm implementiert ist. Die Recheneinheit arbeitet beispielsweise mit einer üblichen Programmiersprache wie C oder C++. Die Computer Programm Kode Elemente führen die zu implementierenden Verfahrensschritte durch.

Bei der dritten Ausführungsvariante hat die Zentrale Zugriff auf einen Speicher, auf dem für zumindest einen Teil der Kunden zumindest eine vorab ausgewählte QoS-Klasse abgespeichert ist. Der Speicher befindet sich in der Zentrale oder einer geeigneten Stelle außerhalb der Zentrale. Die Zentrale ist geeignet, bei einer Anfrage eines Kunden nach einem Dienst oder Applikation diesen Dienst bzw. die Applikation mit einer QoS-Klasse bereitzustellen, die der für den Kunden abgespeicherten QoS-Klasse entspricht. Ist eine QoS-Klasse für einen Kunden nicht gespeichert, werden die Default-Werte benutzt.

Die Zentrale ist beispielsweise als Ressourcen Management Einheit, als Head End oder als Basisstation ausgebildet.

Das Endgerät eines Kunden hat einen Datenträger, z.B. ein RAM, mit einem Computer Programm. Das Computer Programm ist dadurch gekennzeichnet, dass es Computer Programm Kode Elemente beinhaltet, die eine Auswahl mindestens einer QoS-Klasse ermöglichen, wenn das Computer Programm auf einem Computer ausgeführt wird. Als Computer wird hier eine Recheneinheit verstanden, die z.B. sein kann: ein Prozessor, ein DSP (Digitaler Signal Prozessor), ein Mikroprozessor, ein sogenanntes FPGA, eine Verarbeitungseinheit im Telefon, eine Verarbeitungseinheit im Cable Modem oder ein Personalcomputer oder eine Karte desselben. In einer weiteren Ausgestaltung ermöglicht das Computer Programm die Auswahl von Parametern mindestens einer QoS-Klasse. Das Endgerät des Kunden ist beispielsweise als Cable Modem, als Personalcomputer, als Telefon, als Fernsehgerät, als Funkstation oder als Mobilfunkgerät ausgebildet.

## Patentansprüche

1. Verfahren zum Bereitstellen eines Dienstes oder einer Applikation, **dadurch gekennzeichnet, dass** ein von einem Kunden angeforderter Dienst oder eine von dem Kunden angeforderte Applikation mit einer von dem Kunden ausgewählten QoS-Klasse verknüpft wird, und dass dem Kunden der angeforderte Dienst bzw. die angeforderte Applikation mit der vom Kunden ausgewählten QoS-Klasse bereitgestellt wird.

2. Verfahren nach Anspruch 1, **dadurch gekennzeichnet, dass** von einem Endgerät des Kunden eine Anfrage zur Bereitstellung eines Dienstes oder einer Applikation empfangen wird, dass zum Kunden eine Anfrage zur Auswahl einer von mindestens zwei QoS-Klassen übertragen wird, dass die ausgewählte QoS-Klasse vom Endgerät empfangen wird, und dass der angefragte Dienst bzw. die angefragte Applikation mit der ausgewählten QoS-Klasse bereitgestellt wird.

3. Verfahren nach Anspruch 1, **dadurch gekennzeichnet, dass** von einem Endgerät des Kunden eine Anfrage zur Bereitstellung eines Dienstes oder einer Applikation empfangen wird, dass die Anfrage eine von mindestens zwei QoS-Klassen beinhaltet, die vom Kunden vorab ausgewählt wurde, und dass der angefragte Dienst bzw. die angefragte Applikation mit der ausgewählten QoS-Klasse bereitgestellt wird.

4. Verfahren nach Anspruch 1, **dadurch gekennzeichnet, dass** von einem Endgerät des Kunden eine Anfrage zur Bereitstellung eines Dienstes oder einer Applikation empfangen wird, dass auf eine abgespeicherte Vorabauswahl einer QoS-Klasse des Kunden zugegriffen wird, dass der von dem Kunden angeforderter Dienst oder die von dem Kunden angeforderte Applikation mit der von dem Kunden vorab ausgewählten QoS-Klasse verknüpft wird, und dass dem Kunden der angeforderte Dienst bzw. die angeforderte Applikation mit der vom Kunden ausgewählten QoS-Klasse bereitgestellt wird.

5. Verfahren nach Anspruch 1, **dadurch gekennzeichnet, dass** eine bereitgestellte QoS-Klasse während der Dauer der Bereitstellung eines Dienstes bzw. einer Applikation durch den Kunden verändert werden kann durch Übertragen einer neuen QoS-Klasse.

6. Zentrale zur Bereitstellung von Diensten und/oder Applikationen für Kunden deren Endgeräte mit der Zentrale verbunden sind, **dadurch gekennzeichnet, dass** die Zentrale geeignet ist, bei einer Anfrage eines Kunden nach einem Dienst oder Applikation diesen Dienst bzw. die Applikation mit einer QoS-Klasse bereitzustellen, die einer vom Kunden ausgewählten QoS-Klasse entspricht und/oder bei einem bereitgestellten Dienst oder einer bereitgestellten Applikation die QoS-Klasse zu verändern nach Erhalt einer Anforderung des Kunden die QoS-Klasse zu verändern.

7. Zentrale nach Anspruch 6, **dadurch gekennzeichnet, dass** die Zentrale Zugriff auf einen Speicher hat, auf dem für zumindest einen Teil der Kunden zumindest eine vorab ausgewählte QoS-Klasse abgespeichert ist, und dass die Zentrale geeignet ist, bei einer Anfrage eines Kunden nach einem Dienst oder Applikation diesen Dienst bzw. diese Applikation mit einer QoS-Klasse bereitzustellen, die der für den Kunden abgespeicherten QoS-Klasse entspricht.

8. Zentrale nach Anspruch 6, **dadurch gekennzeichnet, dass** die Zentrale als Ressourcen Management Einheit, als Head End oder als Basisstation ausgebildet ist.

9. Computer Programm, **dadurch gekennzeichnet, dass** es Computer Programm Kode Elemente beinhaltet, die eine Auswahl mindestens einer QoS-Klasse ermöglichen, wenn das Computer Programm auf einem Computer ausgeführt wird.

10. Computer Programm nach Anspruch 9, **dadurch gekennzeichnet, dass** es die Auswahl von Parametern mindestens einer QoS-Klasse ermöglicht.

11. Endgerät, **dadurch gekennzeichnet, dass** es einen Datenträger mit einem Computer Programm nach Anspruch 9 enthält.

12. Endgerät nach Anspruch 11, **dadurch gekennzeichnet, dass** es als Cable Modem, als Personalcomputer, als Telefon, als Fernsehgerät, als Funkstation oder als Mobilfunkgerät ausgebildet ist.

13. Computer Programm, **dadurch gekennzeichnet, dass** es geeignet ist, eine von einem Kunden ausgewählte QoS-Klasse mit einem vom Kunden angeforderten Dienst oder eine vom Kunden angeforderte Applikation zu verknüpfen.
